# EUROPEAN PATENT APPLICATION

(11) **EP 4 465 016 A1**
(43) Date of publication of application: **20.11.2024**
(21) Application number: 22932411.6
(22) Date of filing: 08.12.2022
(51) Int. Cl.: G01N 15/10, G01N 15/02, G01N 27/02, G01N 15/00

(54) **METHOD FOR MEASURING PARTICLES IN SOLUTION AND DEVICE FOR PERFORMING SAME**

(30) Priority: 14.03.2022 KR 20220031378
(71) Applicant: Orange Biomed Co., Ltd, Seoul (KR)
(72) Inventor: KO, Ung Hyeon, Seoul 04715 (KR); KANG, Seung Jin, Seoul 04715 (KR); PARK, Eun Young, Seoul 04715 (KR)
(74) Representative: BCKIP Part mbB
(86) International application number: PCT/KR2022/019905
(87) International publication number: WO 2023/177044

(57) **Abstract**

The present disclosure relates to a method for measuring particles in a solution. A particle measuring apparatus according to the present disclosure includes a power unit applying a voltage; a chip in which a plurality of electrodes are sequentially arranged on a microchannel through which a fluid passes; a circuit unit on which at least a part of a bridge circuit is printed so as to achieve a predetermined electrical state with the plurality of electrodes formed on the chip; and a measurement unit measuring a change in an output signal of the bridge circuit due to particles in the fluid passing through the microchannel, and the power unit applies the voltage to the circuit unit. According to the present disclosure, it is possible to accurately measure fine particles in the solution by using a change in the electrical signal. In addition, it is possible to more accurately measure characteristics of the fine particles by using the magnitude and time of the change of the electrical signal.

## Description

### [Technical Field]

The present disclosure relates to a method for measuring particles present in a solution.

### [Background Art]

Various particle counting techniques are being developed for the analysis of the purity of a solution containing minute particles or a cell unit.

For example, a light scattering method calculates the number and size of particles using the correlation between the amount of light that is detected by being reflected by a particle surface in a sample after the light is directly transmitted through the sample and the size or refractive index of the particle to be measured. However, when the surface of the particle has an irregular shape, a degree of reflection of light may vary depending on the surface, and there is a problem that an error occurs accordingly.

On the other hand, a method using electrical resistance allows a conductive sample to pass through a gap between electrodes, and counts particles by using an electric pulse generated in this regard.

Typically, an impedance-based flow cytometer measures particle size and distribution by using the principle of an electrical resistance method. When particles dispersed in an electrolyte solution pass through small holes in a microchannel, the resistance between two electrodes through which a constant current flows increases, an occurrence of a potential difference is measured, and the potential difference is converted into the particle size and distribution.

However, such flow cytometry requires a trained operator in a well-controlled microenvironment, and has a disadvantage in that it is difficult to use flow cytometry outside of a laboratory environment due to a complex instrument.

Therefore, it is necessary to devise a more simplified structure for analysis or diagnosis for portable purposes.

### [Disclosure]

### [Technical Problem]

An object of the present disclosure is to propose a more simplified method for measuring particles in a solution.

More specifically, an object of the present disclosure is to propose a method of individually processing output signals and measuring particles in a solution, by configuring a chip having a microchannel formed therein and a bridge circuit.

More specifically, an object of the present disclosure is to propose a method of counting passage of fine particles by using an electrical signal sensed through a Wheatstone bridge.

More specifically, an object of the present disclosure is to propose a method for measuring the characteristics of particles by using the magnitude and time of an electrical state change according to an input signal and an output signal.

### [Technical Solution]

According to an exemplary embodiment of the present disclosure, a particle measuring apparatus includes a power unit applying a voltage; a chip in which a plurality of electrodes are sequentially arranged on a microchannel through which a fluid passes; a circuit unit on which at least a part of a bridge circuit is printed so as to achieve a predetermined electrical state with the plurality of electrodes formed on the chip; and a measurement unit measuring a change in an output signal of the bridge circuit due to particles in the fluid passing through the microchannel, and the power unit applies the voltage to the circuit unit.

The measurement unit may detect a phase change of the electrical signal as the particles are positioned between the arranged electrode and electrode, and count the particles in the fluid by the number of times the phase changes.

The measurement unit may calculate size of the particles in the fluid by magnitude of an amplitude of the phase-changed electrical signal.

The apparatus may further include a signal converting unit converting an electrical signal applied from the power unit into an AC signal, and then, amplifying the converted AC signal, and adjusting the amplified AC signal to a predetermined offset, and the measurement unit may measure a change in the electrical state with the output signal measured by the bridge circuit after application of the offset-adjusted electrical signal.

The measurement unit may amplify the output signal using the offset-adjusted original electrical signal, convert the amplified output signal into a DC output signal by removing a specific frequency signal in the amplified output signal, and detect an electrical phase value signal due to the change in the electrical state.

The removed frequency may be set to be the same as or similar to a frequency of the original electrical signal.

The measurement unit may calculate a passage time of the particles by using a generation period of the DC output signal.

According to another exemplary embodiment of the present disclosure, a particle measuring method includes applying a voltage to a bridge circuit forming a predetermined electrical state with a plurality of electrodes sequentially arranged on a microchannel through which a fluid passes; and measuring a change in an output signal of the bridge circuit due to particles in the fluid passing through the microchannel.

The measuring may include detecting a phase change of the electrical signal as the particles are positioned between the arranged electrode and electrode, and counting the particles in the fluid by the number of times the phase changes.

The measuring may include calculating size of the particles in the fluid by a magnitude of the phase-changed electrical signal.

The applying of the voltage may include converting an electrical signal into an AC signal and then amplifying the converted AC signal; adjusting the amplified electrical signal to a predetermined offset; and applying the offset-adjusted electrical signal to the bridge circuit.

The measuring may include calculating a difference between output signals output from the bridge circuit and amplifying the difference; multiplying and amplifying a signal with the amplified difference by using the offset-adjusted original electrical signal; and converting the multiplied and amplified output signal into a DC output signal by removing a specific frequency signal in the multiplied and amplified output signal.

### [Advantageous Effects]

According to the various exemplary embodiments of the present disclosure, it is possible to accurately measure fine particles in the solution by using a change in the electrical signal.

In addition, it is possible to more accurately measure characteristics of the fine particles by using the magnitude and time of the change of the electrical signal.

In addition, the present disclosure may efficiently measure characteristics of the particles even with a relatively low voltage through a simple circuit configuration.

In addition, the present disclosure may be directly utilized for clinical diagnosis by quantifying biological characteristics of particles measured by using an individual reference value.

In addition, the present disclosure may be popularized as a measuring apparatus for home use through miniaturization of the measuring apparatus.

### [Description of Drawings]

FIG. 1 is a diagram showing a structure of an apparatus for measuring a particle level according to the present disclosure.
FIG. 2 is a diagram showing a structure of a power unit of an apparatus for measuring a particle level according to the present disclosure.
FIGS. 3A to 3C are diagrams showing a process of a power unit processing an input electrical signal according to the present disclosure.
FIG. 4 is a view showing a structure of a measurement unit of an apparatus for measuring a particle level according to the present disclosure.
FIGS. 5A to 5D are diagrams showing a process of a measurement unit processing an output electrical signal according to the present disclosure.
FIGS. 6A to 6D are diagrams showing a process of detecting an electrical signal by particles according to the present disclosure.
FIG. 7 is a diagram showing a characteristic of a measured signal for measuring a particle level according to the present disclosure.
FIG. 8 is a view showing a characteristic of an electrode structure for measuring a particle level according to the present disclosure.
FIG. 9 is a flowchart showing a method for measuring a particle level according to the present disclosure.

### [Best Mode]

The following description illustrates only a principle of the present disclosure. Therefore, those skilled in the art may invent various apparatuses that implement the principle of the present disclosure and are included in the spirit and scope of the present disclosure although they are not clearly described or shown in the present specification. In addition, it is to be understood that all conditional terms and exemplary embodiments listed in the present specification are obviously intended only to allow those skilled in the art to understand a concept of the present disclosure in principle, and the present disclosure is not limited to the exemplary embodiments and states particularly listed as described above.

The above-mentioned objects, features, and advantages will become more obvious from the following detailed description provided in relation to the accompanying drawings. Therefore, those skilled in the art to which the present disclosure pertains may easily practice a technical idea of the present disclosure.

Further, in describing the present disclosure, in the case in which it is determined that a detailed description of a known technology associated with the present disclosure may unnecessarily make the gist of the present disclosure unclear, it will be omitted. Hereinafter, exemplary embodiments of the present disclosure will be described in detail with reference to the accompanying drawings.

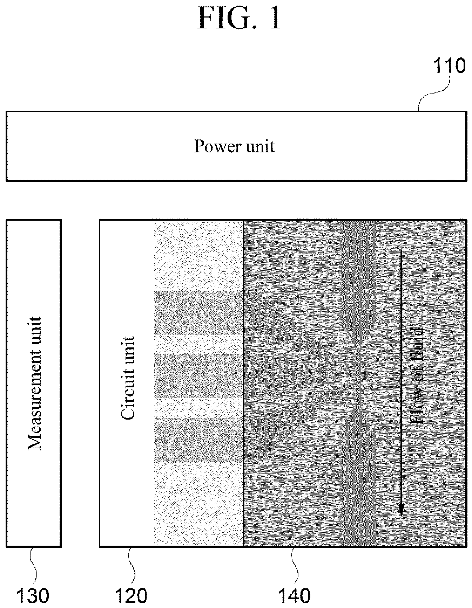

FIG. 1 is a diagram showing a structure of an apparatus 100 for measuring a particle level according to the present disclosure.

Referring to FIG. 1, the particle measuring apparatus 100 according to the present disclosure includes a power unit 110 that provides power, a circuit unit 120 on which a circuit is printed, and a measurement unit 130 that detects and measures an electrical signal output from the circuit unit 120.

In addition, the particle measuring apparatus 100 may be configured to include a microchannel formed between an inlet and an outlet opened to the outside on a substrate and measuring chips 140 in which a plurality of electrodes are arranged in contact with the microchannel.

The chip 140 may be formed in a structure detachable from the particle measuring apparatus 100, and accordingly, a user may measure particles to be measured in a solution while exchanging chips during each measurement.

In addition, electrodes on the inserted chip 140 configure a bridge circuit together with electrodes of the circuit unit 120, and through this, the measurement unit 130 may detect a more minute change in the electrical characteristic.

In the present embodiment, the measurement unit 130 measures an electrical signal output from the bridge circuit in a basic state where an electrolyte solution passes through the microchannel but the particles in the solution do not pass between the electrodes. The measurement unit 130 detects the particles through a change in the electrical signal due to the change in the electrical characteristic such as impedance as the particles in the solution pass through between the electrode and the electrode on the microchannel compared to the measured signal.

Specifically, as the particles in the solution are positioned between the listed first electrodes and second electrodes, the measurement unit 130 may detect a phase change of the electrical signal, and may count particles in a fluid by the number of times the phase-changed signal is generated.

At this time, a pre-processing process of converting power applied from a power unit into an AC may be performed before application so that the particle measuring apparatus 100 according to the present embodiment may operate even through power of a DC voltage of a portable power supply such as a battery.

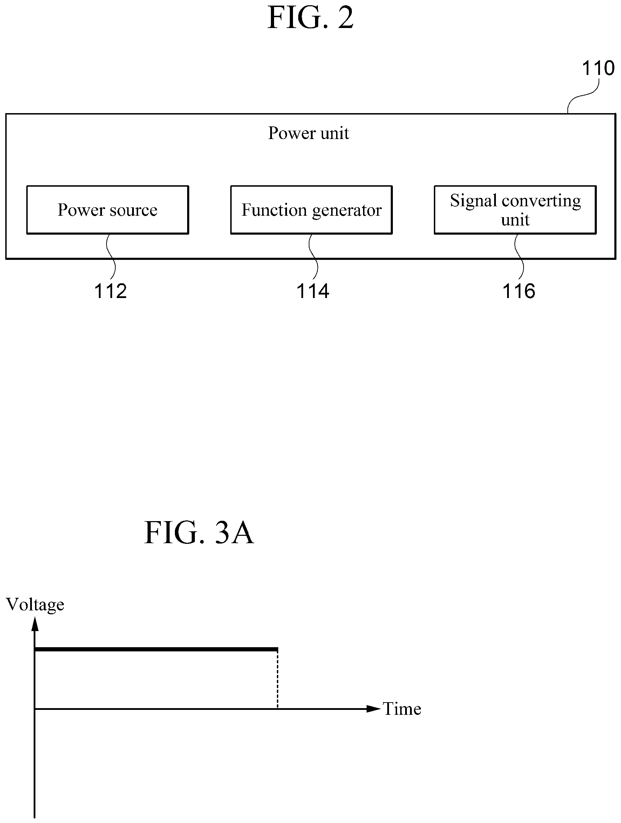

The pre-processing process of an input signal will be described in more detail with reference to FIG. 2.

FIG. 2 is a block diagram showing a detailed configuration of a power unit according to the present embodiment.

Referring to FIG. 2, the power unit further includes a function generator 114 and a signal converting unit 116 in addition to a power source 112.

In general, in the case of power of a portable device such as a battery, because an electrical signal is output in the form of DC power as a terminal maintains a constant pole, in the present embodiment, the function generator 114 converts a DC signal into an AC signal in order to clearly detect a change in a component such as a phase according to particles from a potential difference provided from the power source 112.

Specifically, the function generator 114 converts the applied voltage into a periodic signal having a continuous waveform at a period of a determined function. The function generator 114 may be implemented in various forms, such as a micro control unit, a function generator, etc., if necessary.

Next, the signal converting unit 116 amplifies the AC signal having the continuous waveform and adjusts the AC signal to a predetermined offset. The signal converting unit 116 finally converts the AC signal amplified through adjustment of the offset into the form in which positive and negative voltage values are repeated so as to have the form of a sine wave. The AC signal in which positive and negative voltage values are periodically repeated prevents electrolysis of an analysis solution by the power through an electrode.

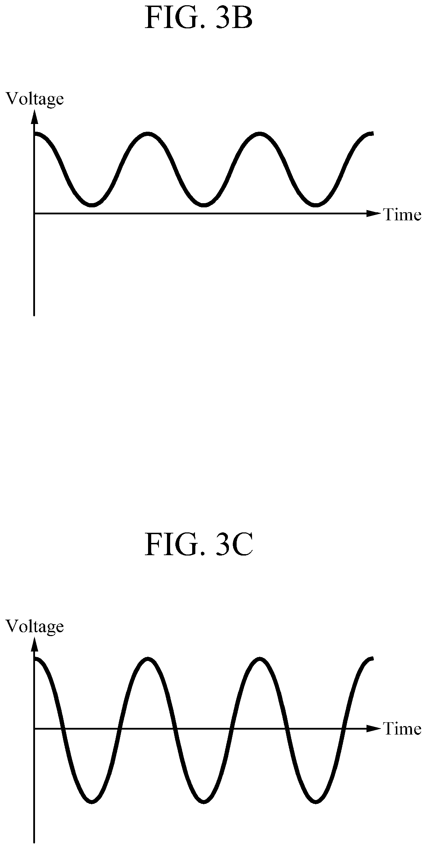

The signal converted in the signal processing process above will be described in more detail with reference to FIG. 3.

Referring to FIG. 3A, as described above, a voltage output from a battery mainly used in a portable device has a constant signal in the form of DC. In the case of a DC signal having no periodicity, it is difficult to detect an electric signal having a minute phase difference depending on the characteristic of a conductive material.

Accordingly, the function generator 114 may change the DC signal of the power source 112 into the continuous waveform and convert the DC signal into a periodic signal of a form shown in FIG. 3B.

Next, the signal converting unit 116 amplifies the input signal to increase a variation in the electrical signal output of the functional generator 114 and simultaneously adjusts the offset to have the form of a sine wave, thereby generating a final input signal as shown in FIG. 3C.

That is, the power unit 110 according to the present disclosure may solve the problem that ions in the electrolyte are extremely concentrated, the solution is electrolyzed, and the resistance is increased in an unidirectional electrical signal of the battery generally used in portable device using the conversion of the AC signal and simultaneously may detect a flow of particles in the electrolyte solution by using a periodic component of the periodic signal of the sine wave.

After the periodic signal generated through the above process is applied to the circuit unit 120, the measurement unit 130 preferably detects a change in the voltage magnitude over time as an electrical signal output from the bridge circuit.

In the present embodiment, the bridge circuit is a Wheatstone bridge and may be designed such that impedances between a plurality of resistors and electrodes are in a mutually equilibrium state. Therefore, compared to detection of a directsignal value, the measurement unit 130 may more sensitively detect a more minute change in the electrical characteristic using an electrical signal generated by a state change in the bridge circuit.

However, the electrical signal detected by the bridge circuit responds sensitively to even noise together, and thus, the measurement unit 130 according to the present embodiment needs to accurately distinguish a change in a component according to a specific particle to be detected from changes in the signal.

Accordingly, the measurement unit 130 according to the present disclosure includes components for accurate detection.

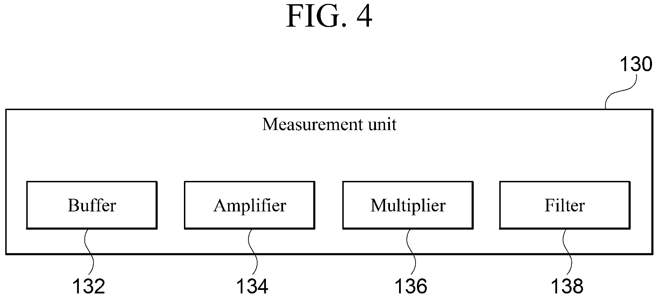

Referring to FIG. 4, the measurement unit 130 includes a buffer 132, an amplifier 134, a multiplier 136, and a filter 138.

The buffer 132 uses the feature that an input impedance is close to infinity to input the output signal output from the bridge circuit to the amplifier 134 as it almost is without being affected by a component of another circuit of the measurement unit 130.

The amplifier 134 serves to calculate a difference between input signals and amplify a difference value. Because the input signal is likely to have various noises from the solution, the noise is firstly removed through amplification of the difference value and only an asymmetric signal value generated from the particles is extracted. An extracted signal is input to the multiplier 136.

The multiplier 136 then multiplies and amplifies the output signal of the amplifier 134. Specifically, the multiplier 136 may amplify the output signal by multiplying the output signal by using the original electrical signal in the form of the offset-adjusted sine wave. The original signal is used because it has the same signal frequency as the output signal, and another signal having the same frequency other than the original signal may be used if necessary.

When the particles in the solution are positioned between an electrode and an electrode on the microchannel while passing through the microchannel, the impedance between the electrode and the electrode by the particles may increase instantaneously, and additionally, a potential difference may occur due to a function of the particles as a capacitor. Accordingly, a change may occur in the amplitude and phase of the voltage signal.

Therefore, the multiplier 136 amplifies a waveform signal by multiplying the original electrical signal and the output signal in order to extract a signal having a phase difference, and simultaneously makes a phase value as a constant value. The output of the multiplier 136 is calculated as the sum of an AC wave having the frequency as a variable and a DC wave affected by the phase difference. Therefore, in order to finally extract only the phase difference generated by the particles, the filter 138 filters the AC wave from the output signal of the multiplier 136.

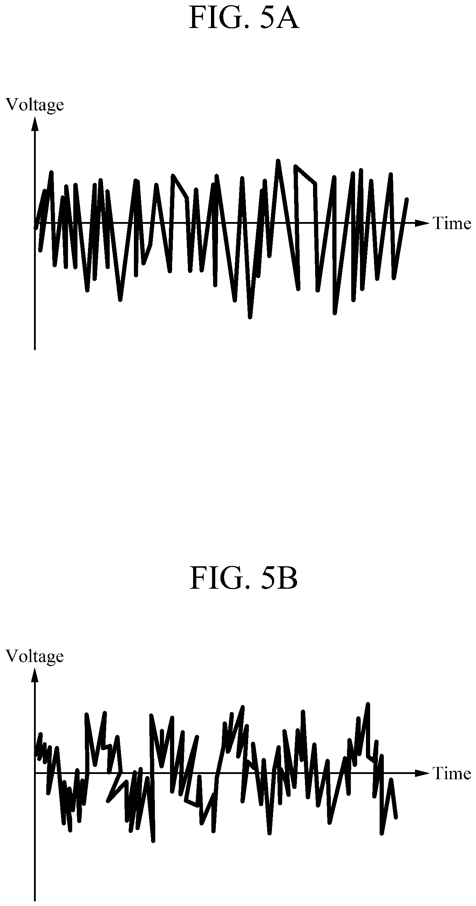

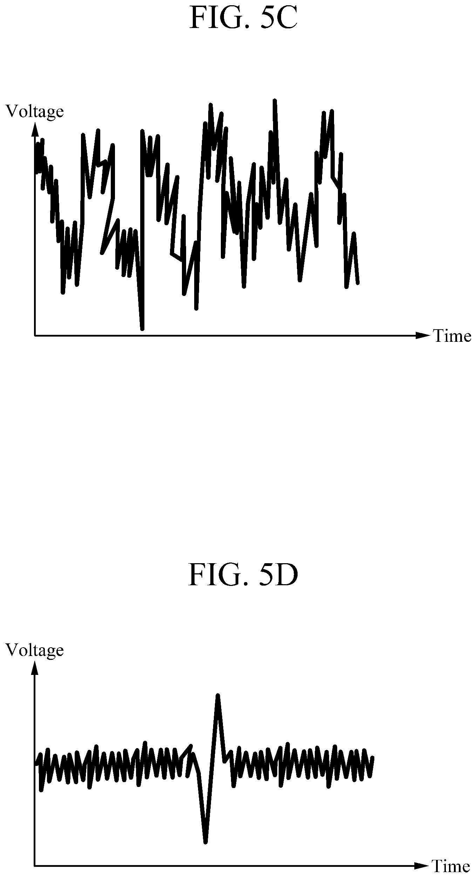

That is, a process for extracting a pure target signal generated by particles from the output signal detected by the above-described measurement unit 130 will be described in more detail with reference to FIG. 5.

Referring to FIG. 5A, an electrical signal output from an initial Wheatstone bridge may have a complex waveform that is not interpretable according to differences in electrical characteristics of the solution and the particles.

Accordingly, the buffer 132 converts the output signal into an interpretable waveform signal by compensating for a bouncing amount of the signal. The converted signal may have a form as shown in FIG. 5B, and the overall signal may have the form close to the sine wave.

At this time, the buffer 132 uses the feature that the input impedance is close to infinity to prevent loss in a signal value measured while connecting different circuits. The signal value passing through the buffer firstly removes noise by amplifying the signal difference value through the amplifier 134. A change in an electrical component due to the particles included in the signal amplify and extract the signal by using the multiplier 136. For signal amplification and extraction, in the present embodiment, the input signal in the form of the offset-adjusted sine wave of the power unit 110 as the input signal and the output signal may be multiplied. The amplified signal in the form shown in FIG. 5C may be output from the multiplier 136.

When the amplified signal after compensation through the buffer passes through a multiplication circuit, the frequency component and the DC waveform in the form of the constant value corresponding to the phase difference are mixed. The filter 138 detects a minute phase difference signal generated by the influence of the particles by removing a signal of the frequency component.

That is, a signal having the phase difference remains in the signal remaining after removing the signal of the frequency component as shown in FIG. 5D.

The output signal from which the component corresponding to the frequency of the input signal is removed is converted into a DC output signal in the same form as the signal first applied from power, and accordingly, the measurement unit 130 may more clearly extract a change component according to the particles in the signal.

The signal output from the filter 138 has a specific waveform as the particles are instantaneously positioned on the electrode and then disappear, and through this, passage of the particles is determined.

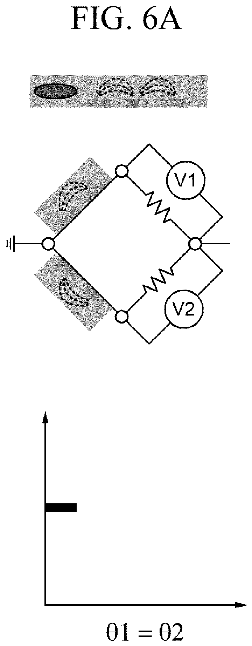

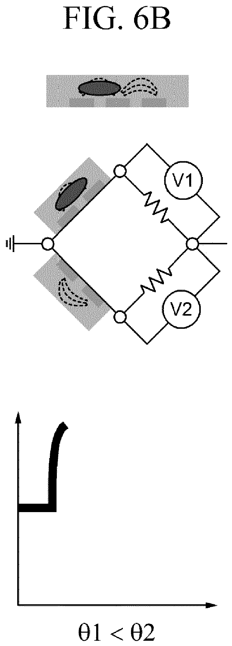

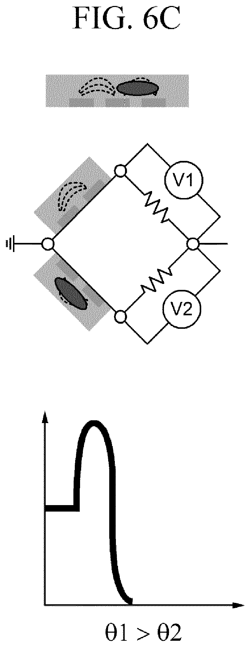

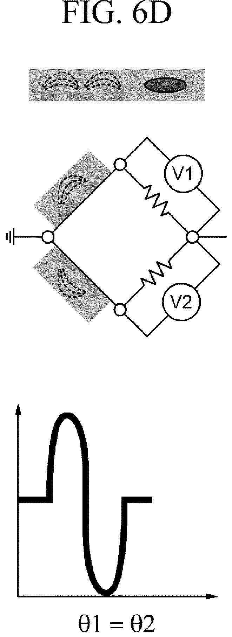

Hereinafter, a process of generating a phase-changed signal of the specific waveform detected according to the passage of the particles in the present embodiment will be described in more detail with reference to FIG. 6.

Referring to FIG. 6A first, in a state before particles pass through an electrode, voltage signals in the bridge circuit are in equilibrium with each other and have the same phase as the input electric signal. Accordingly, the signal output from the filter 138 has a DC waveform as it is.

Subsequently, when the particles further progress and are positioned between a first electrode and a second electrode, a voltage drop occurs as the particles act as a resistor or a capacitor between the corresponding electrode and electrode, and accordingly, there is the effect that a phase θ1 of a voltage V1 is reduced compared to a phase θ2 of a voltage V2. Accordingly, the electric signal according to the phase change may be detected in the form of a part of the waveform from which the input signal and the same frequency signal are removed through the filter 138 as shown in FIG. 6B. Alternatively, it is also possible to detect the waveform by removing the input signal and a similar frequency signal within a predetermined range.

Next, when the particles pass through the first electrode again and are positioned between the second electrode and a third electrode, on the contrary, a voltage drop occurs between the second electrode and the third electrode, and a difference occurs between the phase θ2 of the voltage V2 and the phase θ1 of the voltage V1. Accordingly, a phase difference occurs again, and as the phase of V1 is greater than the phase of V2, a signal in the form of FIG. 6C is detected.

When the final particles pass through all the electrodes, the particles return to a basic state, and a signal in the form of FIG. 6D is detected.

Furthermore, in the case where the particles are cells, when the particles are positioned between the electrode and the electrode with regard to the nature of the cell, the particles may serve as a capacitor, and accordingly, the size or characteristics of the particles may affect the capacitance, and the characteristics may be reflected in the signal.

Therefore, in the present embodiment, it is possible to count the number of particles by detecting the waveform of continuous particles and to calculate the size of the particles by using the size of the waveform.

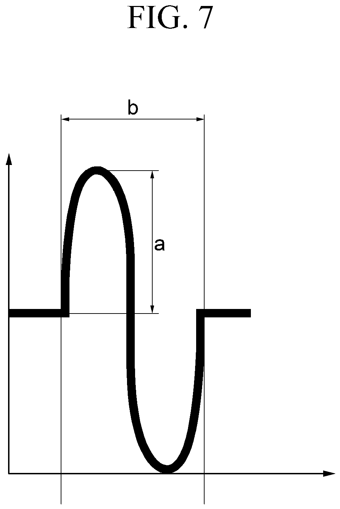

Referring to FIG. 7, a wavelength length of the signal may be calculated as a passage time of the particles. Also, because the magnitude of the signal is proportional to a voltage change as the particles act as a capacitor as described above, it is also possible to calculate the magnitude of the particles using the magnitude of the signal.

In addition, because the above signal is generated from an electrode passage start time of the particles to an electrode passage complete time, it is also possible to calculate additional characteristics of the particles by a temporal characteristic of the signal or converting the temporal characteristic to a passage speed of the particles.

For example, when the particles in the solution have elasticity like cells, the shape and size thereof may be changed according to the original stiffness, and it is possible to pass through a passage of a width smaller than the original size by reducing the diameter of the body. However, when cells in the human body are combined with various substances or when physical rigidity increases due to aging, elasticity of cells decreases, and cells become harder.

Cells of increased rigidity take more time to pass through passages of the same width, and the particle measuring apparatus according to the present embodiment may identify characteristics of the cells by using the proportional relationship between the passage time (wavelength length) and factors affecting rigidity and perform biological judgments such as diagnosis.

For example, a red blood cell of increased stiffness within blood due to the influence of glycated hemoglobin needs more time to pass through even a passage of the same width. The particles measuring apparatus according to the present embodiment makes it possible to measure a degree of glycation of an individual red blood cell by using a proportional relationship between a passage time and a glycated hemoglobin level (HbA1C level).

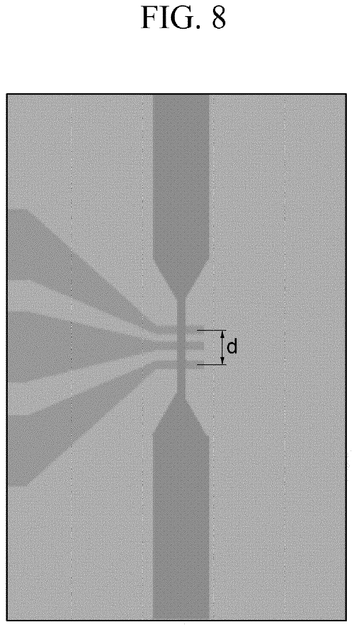

In addition, referring to FIGS. 7 and 8, a fluid is formed in a minute pattern of an electrode, but a distance d between the electrode and the electrode may be calculated in advance, and thus, it is also possible to calculate the electrode passage speed through a wavelength length b of the waveform.

As described above, the measurement unit 130 according to the present embodiment may count the number of particles by using the characteristic of the DC signal output from the filter 138, and may also distinguish the particles through the unique characteristics of the particles by using the size or length of the signal.

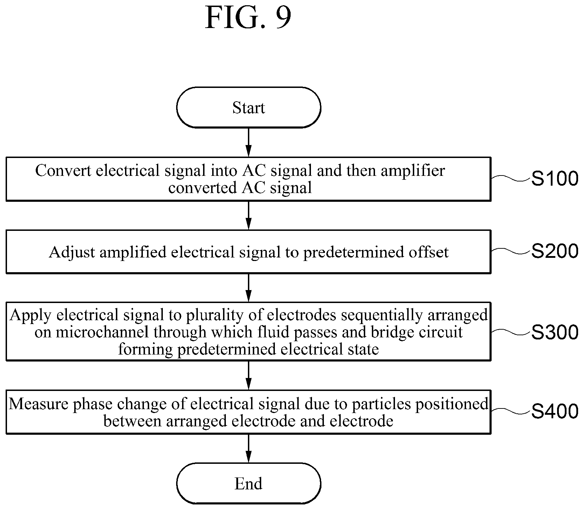

Hereinafter, a particle measuring method according to the present embodiment will be described with reference to FIG. 9.

Referring to FIG. 9, first, in order to apply voltage to a plurality of electrodes sequentially arranged on a microchannel through which a fluid passes and a bridge circuit forming a predetermined electrical state, an electrical signal is firstly converted into an AC signal, and then the converted AC signal is amplified.

Next, the amplified electrical signal is adjusted to a predetermined offset in order to transform the electrical signal into the same form as a sine wave (S200).

The above preprocessed input signal is applied to the bridge circuit (S300).

Next, a change in the electrical state of the bridge circuit due to particles in the fluid passing through the microchannel is measured from the output electrical signal (S400). Specifically, for measurement, only a bouncing signal according to a difference in characteristics of particles and a solution may be extracted and amplified from among some of output signals output from the bridge circuit.

A minute signal generated as the particles are positioned between the electrode and the electrode arranged in the microchannel may be detected, by removing a specific frequency signal in the amplified output signal and converting the output signal into a final DC output signal, and the particles in the fluid may be counted by the number of times the detected signal is generated.

In addition, it is possible to calculate the size of particles in the fluid based on the magnitude of the phase-changed electrical signal, and simultaneously, it is also possible to calculate the passage time based on the amplitude of the electrical signal.

As described above, according to the present disclosure, it is possible to accurately measure minute particles in a solution by using a change in an electrical signal.

In addition, it is possible to more accurately measure characteristics of the minute particles by using the magnitude and time of the change in the electrical signal.

In addition, the present disclosure may efficiently measure characteristics of particles even with a relatively low voltage through a simple circuit configuration.

The degree of glycation may be easily measured by using the change in the physical characteristics of the particles according to the glycation of the particles.

In addition, the degree of glycation may be determined more stably in response to external and human factors compared to the measurement equipment of biochemical technique by calculating the hardness of each individual particle using the time taken to pass through a minute channel.

In addition, the present disclosure may recognize a minute electrical change occurred by the passage of the particles through a simple circuit configuration, and through this, determine the degree of glycation of the particles.

In addition, the present disclosure may be directly utilized for clinical diagnosis by correcting the particle level measured by using an individual reference value.

Furthermore, various embodiments described herein may be implemented in a computer or a similar device-readable recording medium using, for example, software, hardware, or a combination thereof.

According to a hardware implementation, the exemplary embodiments described herein may be implemented using at least one of application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, and electric units for performing other functions. In some cases, the exemplary embodiments described in the present specification may be implemented by a control module itself.

According to a software implementation, the exemplary embodiments such as procedures and functions described in the present specification may be implemented as separate software modules. Each of the software modules may perform one or more functions and operations described in the present specification. Software code may be implemented in software applications written in a suitable programming language. The software code may be stored in a memory module and may be executed by the control module.

The above description is merely illustrative of the technical idea of the present disclosure, and various modifications, changes, and substitutions may be made by those skilled in the art without departing from the essential features of the present disclosure. Accordingly, the exemplary embodiments disclosed in the present disclosure and the accompanying drawings are not intended to limit the technical idea of the present disclosure but to describe the present disclosure, and the scope of the technical idea of the present disclosure is not limited by the exemplary embodiments and the accompanying drawings. The protection scope of the present disclosure should be interpreted by the following claims, and all technical ideas within the equivalent scope should be interpreted as being included in the scope of the present disclosure.

## Claims

1. An apparatus for measuring particles in a solution, the apparatus comprising:
a power unit applying a voltage;
a chip in which a plurality of electrodes are sequentially arranged on a microchannel through which a fluid passes;
a circuit unit on which at least a part of a bridge circuit is printed so as to achieve a predetermined electrical state with the plurality of electrodes formed on the chip; and
a measurement unit measuring a change in an output signal of the bridge circuit due to particles in the fluid passing through the microchannel,
wherein the power unit applies the voltage to the circuit unit.

2. The apparatus of claim 1, wherein the measurement unit detects a phase change of the electrical signal as the particles are positioned between the arranged first electrode and second electrode, and counts the particles in the fluid by the number of times the phase changes.

3. The apparatus of claim 2, wherein the measurement unit calculates size of the particles in the fluid by magnitude of an amplitude of the phase-changed electrical signal.

4. The apparatus of claim 1, further comprising: a signal converting unit converting an electrical signal applied from the power unit into an AC signal, and then, amplifying the converted AC signal, and adjusting the amplified AC signal to a predetermined offset,
wherein the measurement unit measures a change in the electrical state with the output signal measured by the bridge circuit after application of the offset-adjusted electrical signal.

5. The apparatus of claim 4, wherein the measurement unit amplifies the output signal using the offset-adjusted original electrical signal,
converts the amplified output signal into a DC output signal by removing a specific frequency signal in the amplified output signal, and
detects a signal due to the change in the electrical state.

6. The apparatus of claim 5, wherein the removed frequency is set to the same or similar to a frequency of the original electrical signal.

7. The apparatus of claim 5, wherein the measurement unit calculates a passage time of the particles by using a generation period of the DC output signal.

8. A method for measuring particles in a solution, the method comprising:
applying a voltage to a bridge circuit forming a predetermined electrical state with a plurality of electrodes sequentially arranged on a microchannel through which a fluid passes; and
measuring a change in an output signal of the bridge circuit due to particles in the fluid passing through the microchannel.

9. The method of claim 8,
wherein the measuring includes detecting a phase change of the electrical signal as the particles are positioned between the arranged first electrode and second electrode, and
counting the particles in the fluid by the number of times the phase changes.

10. The method of claim 9, wherein the measuring includes calculating structural and electrical characteristics including a size of the particles in the fluid by a magnitude of the phase-changed electrical signal.

11. The method of claim 8, wherein the applying of the voltage includes
converting an electrical signal into an AC signal and then amplifying the converted AC signal;
adjusting the amplified electrical signal to a predetermined offset; and
applying the offset-adjusted electrical signal to the bridge circuit.

12. The method of claim 11, wherein the measuring includes calculating a difference between output signals output from the bridge circuit and amplifying the difference;
multiplying and amplifying a signal with the amplified difference by using the offset-adjusted original electrical signal; and
converting the multiplied and amplified signal into a DC output signal by removing a specific frequency signal in the multiplied and amplified signal.
